Europäisches Patentamt

(19) European Patent Office

Office européen des brevets

(11) Publication number: **0 137 662**
A1

(12) **EUROPEAN PATENT APPLICATION**

(21) Application number: **84305635.9**

(22) Date of filing: **17.08.84**

(51) Int. Cl.⁴: **B 07 C 5/34**
**G 01 M 3/00**

(30) Priority: **19.08.83 GB 8322362**

(43) Date of publication of application:
**17.04.85 Bulletin 85/16**

(84) Designated Contracting States:
**AT BE CH DE FR GB IT LI LU NL SE**

(71) Applicant: **Boxwrap Limited**
**Westfield Road Industrial Estate**
**Southam Nr. Leamington Spa Warwickshire CV33**
**0JH(GB)**

(72) Inventor: **Wouters, F. A. c/o Boxwrap Ltd.**
**Westfield Road Industrial Estate**
**Southam Warwickshire CV33 0JH(GB)**

(74) Representative: **Adkins, Michael et al,**
**Withers & Rogers 4 Dyer's Buildings**
**Holborn London, EC1N 2JT(GB)**

(54) Method and apparatus for checking packages.

㊲ Packages 12a to 12e are deposited individually by a delivery mechanism 10 to a fast moving conveyor 27 which accelerates the package. If a heat sealed trailing end of the package is faulty, relative movement between the package product P therein causes the product to force the end open and product is lost from the package. The loss of product is detected by a sensor 32 which provides a signal causing the faulty package to be rejected.

FIG.1

EP 0 137 662 A1

## METHOD AND APPARATUS FOR CHECKING PACKAGES

The invention relates to a method and apparatus
for checking packages and is particularly but not exclusively
concerned with the checking of sachets containing particulate
material.

It is now well accepted to pack food items such
as powder soups, gravy powder, dried milk, etc. in sachets.
The sachets are filled by machinery which introduces
a measured amount of material into each sachet through
an open end, seals the open end of the sachet, places
the sachet on the check weigher and then conveys the
sachet to a packing station. The check weigher is normally
arranged to reject any sachet which is below a given
weight by a set amount. At the packing station the sachets
may be packed manually into cartons or may be packed
automatically by machinery. The former case is advantageous
in that the manual packers can briefly check the sachets
to ensure that they are undamaged and, in particular,
that the end through which the contents were introduced
is properly sealed. However manual packing is slow compared
to an automated system and the running speed of the filling
machinery is somewhat restricted. When using packing
machinery, the production line can be run very much faster
but the inspection aspect is lost and it has been known for faulty sachets to be packed, the contents of which spill out during transit to the consumer. The sealing of sachets is normally effected by heat-sealing bars. However, high-speed introduction of particulate material into sachets tends to create dust which can reduce the effectiveness of the heat seal. Therefore high-speed packaging can lead to an increase in faulty sachets. Unless a considerable amount of material spills from the sachets prior to arrival at the check weigher the latter is unable to sense any significant reduction in weight and therefore "passes" the sachet. In known machinery little, if any, product will spill even from a badly sealed sachet prior to reaching the check weigher, and so the faulty sachets are generally packed along with the others.

An object of the present invention is to provide a method and apparatus for checking packages such as sachets so as to reduce the likelihood of faulty packages reaching a packing station.

According to one aspect of the invention there is provided a method of checking packages comprising causing the package and product to move relative to each other and using detector means 32 to detect loss of product from the package resulting from said relative movement and to provide a signal which indicates that product loss has occurred.

Preferably, the method includes accelerating said package so as to cause the package to move relative to the product. Acceleration of the package is preferably rapid, eg from rest, so that the package will move rapidly relative to the product thereby tending to leave the bulk of the product behind.

Where a product has been introduced through an end or side of the package which is subsequently closed, the acceleration is preferably in a direction which causes the said end or side to move towards the product. The said end or side contacts the products in such a case and if closure is faulty the product will force the sachet open allowing at least some product to escape through the open end or side.

Preferably, the method includes urging the package, eg. in a downward direction, towards a conveyor moving in a direction transverse to the direction of movement of the package, which conveyor accelerates said package. Where the package is urged downwardly,the rate of said downward movement is preferably greater than the rate at which gravity alone would move the package towards the conveyor. The change of direction of movement of the package creates aforesaid rapid acceleration.

The method may include determining the time it takes for the package to move between a position at which the loss of product is detected and reject means such as a gate, and using the signal to cause rejection of the package by the reject means. Preferably the method includes using a plurality of timers which operate as respective packages pass between a feed-in position and the reject means whereby on sensing the arrival of a first package at the feed-in position a first said timer begins to operate, on sensing the arrival of a second package at the feed-in provision a second said timer begins to operate and so on. In such a case the sensor on detecting the loss of product from a package preferably directs a signal to the timer associated with that package and the timer causes the reject gate to reject the package.

The method may include vibrating the package to cause said relative movement or further relative movement. Such vibration may be carried out with the package inclined so that the end or side through which the product has been introduced is lower than the remainder of the package. However, such inclination is not essential where closure of the side or end is faulty, the vibration may cause product to be lost through said end or side where the vibration causes further relative movement, the method may include detecting any loss of product as a result of vibration so that detection of such product loss may be used to cause the package to be rejected. The vibration is useful in that it also distributes the product evenly within the package.

Preferably the method includes passing the packages through a smoothing station which applies pressure to the exterior of the packages prior to packing into a carton or other container. Where the packages have been vibrated, the resulting even distribution of the product facilities smoothing of the package.

According to another aspect of the invention there is provided apparatus for checking packages comprising means for causing the package and product to move relative to each other, and detector means is provided for detecting loss of product from the package and for providing a signal which indicates that product loss has occured.

Preferably acceleration means, e.g. in the form of a conveyor, is provided on to which the package is deposited.

The package is preferably deposited on the conveyor by means of apparatus described in U.K. Patent No. 1,468,924.

The detector is preferably associated with timer means arranged to operate reject means after receiving a signal from the sensor on detecting product loss.

Product loss may alternatively be detected at a vibration station at which the packages are vibrated to cause said relative movement.

Said detector may be arranged to detect product loss at said vibration station.

Preferably said vibration station comprises a vibratory conveyor, and vibration may be effected by rotary cam-like members which engage the conveyor.

Means may be provided for holding the packages against the vibratory conveyor. Said means may comprise a further conveyor and/or a device for directing air on to the packages to urge them against the vibratory conveyor.

Spaced apart belts, rollers or the like may be provided for shaping the packages downstream of the vibration station and upstream of a packing station.

Quick release means may be provided for separating said vibratory conveyor and further conveyor and/or for separating the aforesaid spaced apart belts.

We prefer to arrange the apparatus for depositing the packages on to the acceleration conveyor so that it can be optionally shifted clear of an infeed conveyor which delivers packages to the package depositing apparatus. Such an arrangement facilities serving of the package depositing apparatus whilst allowing packages to be delivered, eg by gravity, from the infeed conveyor to the acceleration conveyor.

Where the aforesaid spaced apart shaping belts are provided, the spacing may be varied by adjusting the position of one belt, eg. by screw adjustment means. Said one belt may be mounted on a pair of rollers, each of which is carried by adjustment arms movable by said screw adjustment means.

A method and apparatus in accordance with the invention will now be described by way of example with reference to the accompanying drawings in which:

Figure 1 is a schematic elevation of one form of apparatus in accordance with the invention,

Figure 2 is a view of part of the apparatus of Figure 1 looking in the direction of arrow II in Figure 1,

Figure 3 is a view of part of the apparatus of Figure 1 illustrating mounting details,

Figure 4 is a view similar to Figure 1 used to illustrate the way in which sachets are associated with respective timers,

Figures 5 and 6 illustrate in plan and end elevation a pivotal mounting for a delivery mechanism of the apparatus of Fig 1,

Figure 7 shows an alternative positioning for belts in vibration and smoothing zones and,

Figure 8 is an elevation of an alternative form of smoothing zone.

A delivery mechanism 10, which in the embodiment illustrated is of a type disclosed in U.K. Patent No. 1468924, receives packages such as sachets 12 from an infeed conveyor 13. The sachets arriving at the delivery mechanism 10 have been filled at a filling station (not shown) by introducing product such as peanuts, powdered soup etc., through an open end of the sachet. The open end is then closed by heat sealing bars (not shown) to form a rear or trailing edge 14. The sachets are then conveyed to a check weighing machine (not shown) prior to being conveyed to the delivery mechanism 10.

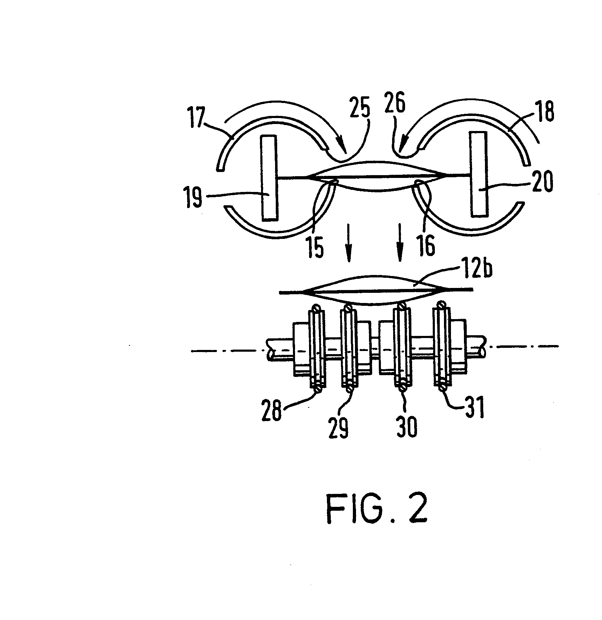

The sachets delivered by conveyor 13 are introduced on to support surfaces 15, 16 (Fig, 2) of two tubular delivery members 17, 18 respectively between side guides 19,20. The speed at which the sachet is delivered by the conveyor 13 ensures that its leading edge 22 abuts stop surfaces 23 on the delivery members 17,18. A sensor 24 detects the presence of a sachet in the delivery mechanism as shown in 12a and transmits a signal to a driving motor (not shown) for the delivery members. The delivery members then rapidly rotate in opposite directions as shown in Figure 2 so that surfaces 25, 26 push the sachet downwardly into an acceleration zone 9 comprising a continuously moving conveyor 27. The conveyor 27 is driven faster than the conveyor 13. For example if the speed of the conveyor 13 is x cm/sec then the delivery speed of conveyor 27 may be 7x cm/sec. However, the speed ratio may vary depending on the particular package and product concerned. The delivery members 17, 18 urge the sachets downwardly faster than they would fall by gravity.

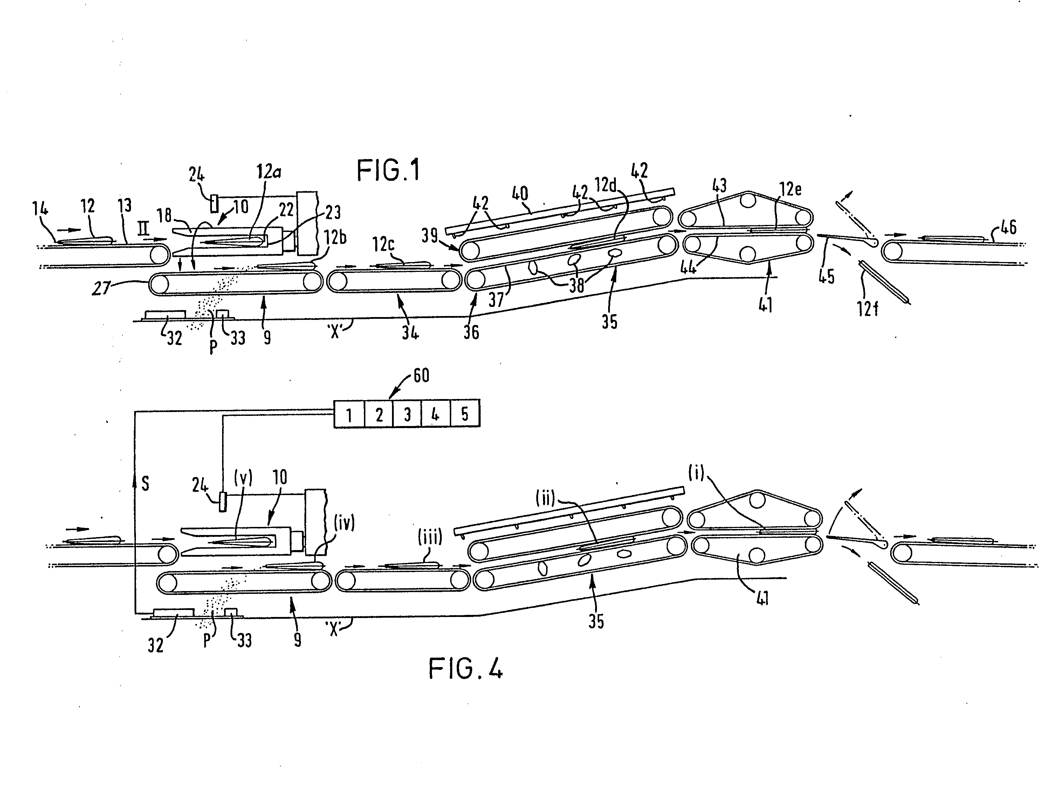

The conveyor 27 comprises four separate belts 28, 29, 30 and 31 as shown in Figure 2. The belt configuration is such that the upper run of the conveyor 27 is trough-like in cross-section to ensure as much contact as possible between the convex underside of the sachet (indicated at 12b in Figs. 1 and 2) and the conveyor. The conveyor accelerates the sachet rapidly over a short distance from a substantially zero horizontal speed component to the speed of the conveyor. The speed at which the delivery mechanism 10 projects the sachet towards the conveyor 27 ensures minimum slippage between the conveyor 27 and the sachet.

As the sachet accelerates, it tends to leave the product behind due to the inertia of the product and the rear edge 14 of the accelerating sachet encounters the resistance of the product. If sealing of the rear edge 14 is faulty, the force of the product against the rear edge stresses the faulty edge and separates the badly sealed surfaces of the sachet thereby allowing product to escape from the sachet as indicated at P. Product P escaping from the opened rear edge of the sachet 12b is detected by a sensor 32 (constituting the aforesaid detector means) such as photoelectric switch which is capable of detecting very small particles of material which move between the sensor and a light source 33. A signal from the sensor 32 is used to trigger a reject gate 45 as described hereinafter.

The conveyor 27 carries the sachet 12b towards a further conveyor 34 which conveys at a reduced speed e.g. $3\frac{1}{2}$x cm/sec. A sachet 12c is indicated in position on the conveyor 34. The conveyor 34 carries sachets to a vibration zone 35 which includes a lower conveyor 36 having an upper run 37 which is vibrated by means of rotary cams 38, a holding belt 39 (which may comprise a plurality of belts) for holding sachets against the upper run 37 (sachet 12d being shown in position beneath belt 39) and an air chamber 40 having outlets 42 for directing jets of air towards conveyor 36. Sachets such as 12c and 12d which have perfect edge seals are sufficiently bulky to engage both the upper run 37 of the conveyor 36 and the lower run of belt 39. However, where product is lost as from sachet 12b, the sachet might not engage the lower run of belt 39 but in that case the air jets press it against the upper run 37. Vibration of the upper run 37 shakes the sachets rapidly and distributes the product evently in the sachet. Looking at sachet 12 in conveyor 13 it can be seen that the bulk of the product initially lies towards the leading end of the sachet as a result of the filling operation. Although the acceleration by belt 27 causes much of the product to occupy the rear end of the sachet as at 12c it is found that a more even distribution

- 9 -    0137662

can be effected by vibrating the sachets on a vibrating conveyor. The conveyor 36 may be constructed from several belts in a manner similar to conveyor 27 to provide an upper run of trough-like cross-section. As shown in Figure 1 the cams 38 are out of phase in relation to each other. Although product will normally be lost from a faulty pack during acceleration on belt 27, residual product will also escape from the sachet as it is vibrated on belt 36. If desired, the sensor 32 could instead be located at the vibration section 35 to sense loss of product in that section, a particularly useful feature where the product is of a powder-like nature substantial loss of which is more likely to occur as a result of vibration. However the acceleration even of a powdered product has been found to open a badly sealed edge of a package. In fact it may be possible to dispense with the acceleration belt in certain cases and simply feed the sachets from conveyor 13 to the vibration zone 35 which may be sufficient in itself to cause loss or product from a faulty sachet.

From the vibration zone 35, the sachets pass to a smoothing zone 41 comprising upper and lower flat belts 43, 44, which convey sachets towards a reject gate 45. Sachet 12e is shown between the two belts. The belts 43, 44 are spaced so as to smooth the surface of the sachet by applying a gentle load to the upper and lower side surfaces of the sachet. The even distribution of the product resulting from vibration in zone 35 is such that the belts 43, 44 do not compress the product but merely cause the material of the sachet to take on a flattened shape rather than the curved form apparent from Figure 2 resulting from the filling step. Provided that the sachets are not found to be faulty, they move over the reject gate on to a conveyor 46 which delivers them to a packaging maching (not shown). If a faulty pack is sensed, the reject gate lifts as described below prior to the sachet leaving the belts 43, 44 so that the faulty sachet, e.g. sachet 12f, is rejected.

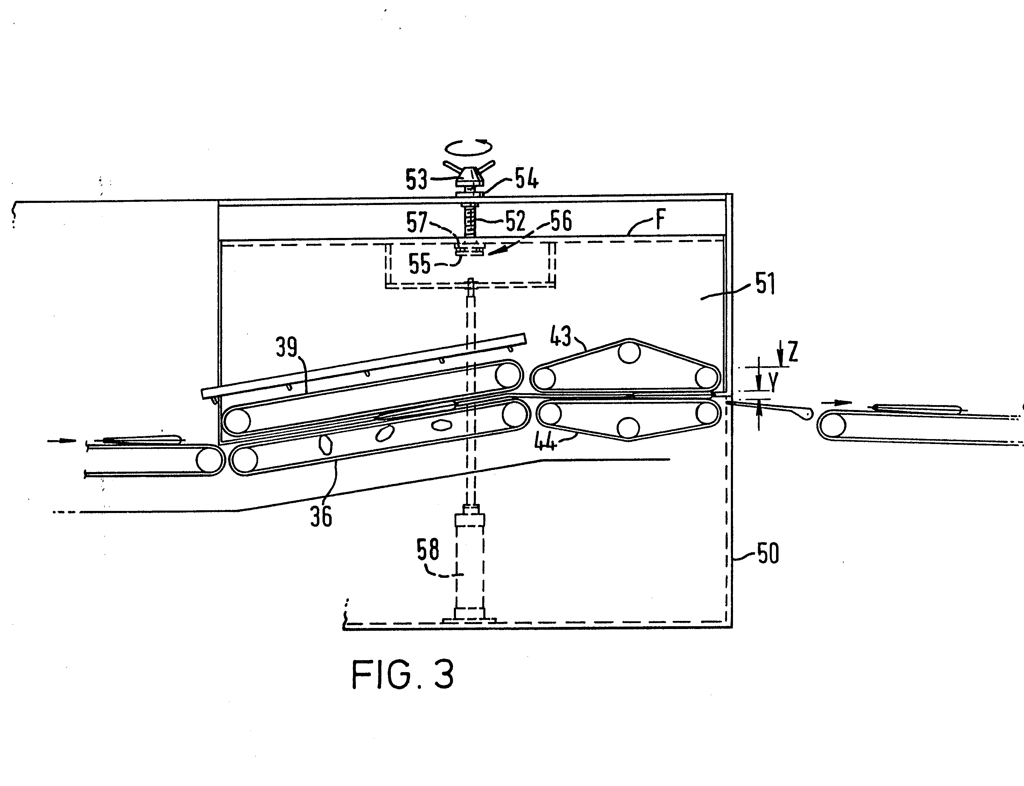

As shown in Fig. 3 conveyor 36 and belt 44 are mounted on a bed 50 of the apparatus. Belt 39, air chamber 40 and belt 43 are mounted on a plate 51 which is vertically adjustable on the bed by means of a screw 52 having a wing-like head 53. The screw extends through a nut 54 on the bed 50 and extends with working clearance through a horizontal flange F on the plate 51. The lower end of the screw is fast with a lower race 55 of a thrust bearing 56 having an upper race 57 which abuts the underside of flange F.  Rotation of screw 52 will raise or lower the plate 51 thereby adjusting the vertical spacing between conveyor 36 and belt 39 and spacing Y between the belts 43, 44.  Preferably a quick- release arrangement is provided to raise the plate 51 rapidly should it be necessary to remove  sachets or debris from the vibration and/or smoothing zones.  The rapid lifting of the plate 51 through a distance Z is effected by a hydraulic ram 58 which pushes plate 51 upwardly when desired, the flange F lifting clear of the race 57.  A protective cover may be provided for the vibration and smoothing zones 35, 41.  On opening the cover the ram 58 may be arranged to lift plate 51 automatically.  A protective cover may  also be provided for the acceleration zone 9 and on opening that cover the operation of the entire apparatus may be automatically interrupted.

The way in which the opening of gate 45 is controlled so as to reject only faulty sachets will now be described.

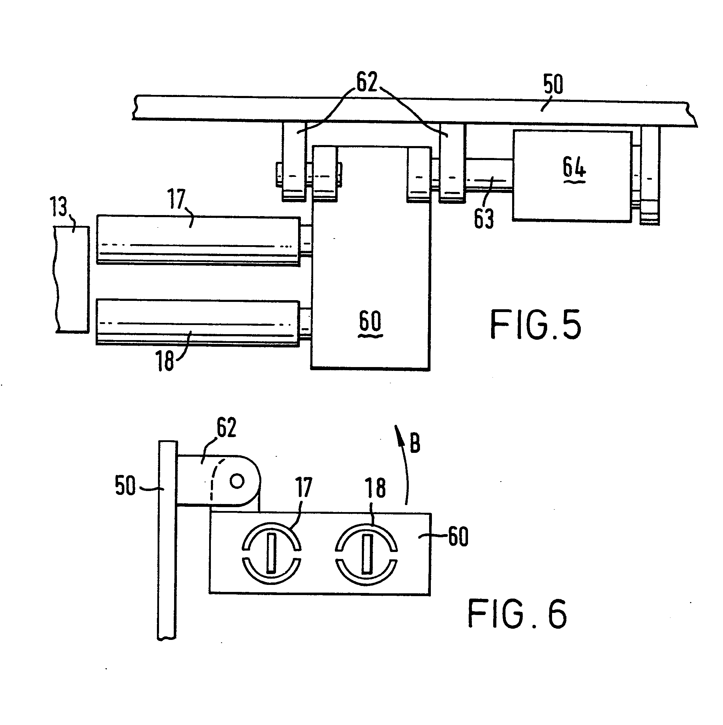

Figure 4 shows apparatus identical to Figure 1 and corresponding components carry the same reference numerals except for the sachets.

As each sachet enters the delivery mechanism 10, the sensor 24 initiates a timing device 60.  In this embodiment the timing device comprises five individual timers 1, 2, 3, 4 and 5.  As illustrated, sachets i to iii have entered the apparatus and the sensor 24 has initiated the respective timers 1, 2 and 3.  These sachets are not faulty and pass through the apparatus over a predetermined time. At the end of that time, the associated timers return to zero until triggered again by subsequent sachets sensed by sensor 24. However, sachet iv has a faulty rear edge and product P escaping therefrom in the acceleration zone 9 is detected by the sensor 32. The sensor 32 sends a signal S to timer 4 which was initiated by sachet iv as the sachet entered the delivery mechanism 10. On receiving the signal, and as the time taken for the sachet to reach the gate 45 after particle detection is known, the timer causes the gate 45 to lift shortly before the sachet iv emerges from the smoothing zone 41 so that the faulty sachet is rejected. The gate 45 pivots upwardly about one end and is advantageous in that respect because the flap can lift while a previous non-faulty sachet is still on its upper surface. If the reject flap were a drop-down type it would be necessary for the previous sachet to be completely clear of the flap prior to flap movement. Therefore the apparatus can be run faster by using a lift-up gate.

The sensor 32 and light source 33 can be moved along a path X to the optimum particle detection position and the timing between particle detection and arrival of the relevant sachet at the gate 45 adjusted accordingly.

From time to time it may be necessary to service the delivery mechanism 10. To permit the remainder of the machine to remain operational, the delivery mechanism may be mounted on the bed of the machine as shown in Figs 5 and 6.

In Figs. 5 and 6 the delivery members extend from a housing 60 which is pivotally mounted on lugs 62 fast with the bed 50. The axis of pivoting is coaxial with a drive input shaft 63 for driving the delivery members and which is driven from a clutch 64 having a drive input (not shown) from a motor. To service the delivery mechanism the housing 60 is pivoted as per arrow B clear of the delivery end of conveyor 13. Packages can still be delivered by the conveyor 13 but instead of being thrust downwardly by the delivery mechanism 10, they simply fall on to the conveyor 27 for subsequent acceleration. Whilst there is an increased likelihood of slippage between the packages and the conveyor 27, the acceleration will normally be sufficient to reveal a faulty seal. Moverover the packages still travel through the vibration zone 35 where product loss can be detected if necessary.

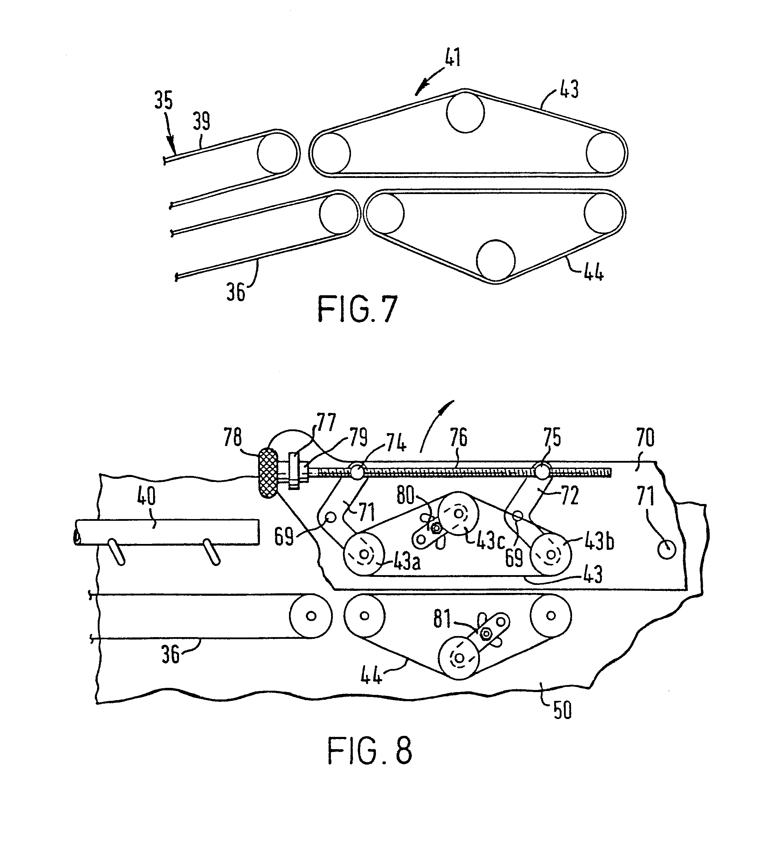

It may be useful to shorten the holding belt 39 and lengthen belt 43 as shown in Fig. 7 so that belt 43 overlaps belt 36. Such an arrangement provides a very smooth transfer of packages from the vibration zone 35 to the smoothing zone 41.

Instead of mounting the belts 39 and 43 on a common lifting plate as shown in Fig. 3 the belt 43 may be mounted differently as shown in Fig. 8 .

In Fig.8, the upper belt 43 is mounted between spaced support plates 70 (one only of which is shown) pivotally mounted at 71 on the bed 50, the conveyor 36 being shown horizontal in this embodiment without a holding belt 39. The upper belt 43 has supporting rollers 43a, 43b mounted on cranked levers 71,72 pivotally connected at 69 to the plates 70. The upper ends of the levers 71, 72 are provided with screw threaded bosses 74, 75 through which a screw threaded adjusting rod 76 passes. The rod 76 passes with working clearance through a bracket 77 on the side plates, the bracket 77 lying between a knurled nut 78 and a fixed shoulder 79 on the rod. Rotation of the rod causes the levers 71, 72 to pivot in unison so as to raise or lower the upper belt 43 relative to the lower belt. Tensioning of belts 43,44 can be effected by pivoted roller-carrying arms, 80,81. The arm 80 is resiliently biased upwardly to maintian tension in belt 43 during adjustment of levers 71,72. Drive is transmitted to the belts 43, 44 by a motor (not shown) and suitable drive transmission (not shown). The side plates 70 can be swing upwardly about 71 to lift belt 43 away from belt 44 to remove packages or debris from between them.

Product such as powdered soup which frequently comprises fine particles and larger dried vegetables tends to be deposited in layers in the packages. Users of such product on opening a package, generally prefer to see mingled ingredients rather than layers and it has been found that apparatus in accordance with the invention helps to overcome the " layer " problem. The acceleration step tends to force the larger ingredients into the mass of finer particles and the vibration step further enhances mixing within the package.

Whilst particular reference has been made to sachets it is envisaged that other forms of packages and product e.g. bagged metal washers, could be checked by a method and apparatus in accordance with the invention.

0137662

CLAIMS:-

1.      A method of checking packages containing product characterised by causing the package(12b) and product (P) to move relative to each other and using detector means (32) to detect loss of product from the package resulting from said relative movement and to provide a signal which indicates that product loss has occured.

2.      A method according to claim 1 characterised by accelerating said package (12b) so as to cause the package to move relative to the product (P).

3.      A method according to claim 2 characterised by accelerating the package (12b) substantially from rest.

4.      A method according to claim 2 or 3 characterised by urging the package (12a) towards a conveyor (27) moving in a direction transverse to the direction of movement of the package, which conveyor accelerates said package.

5.      A method according to any preceding claim characterised by determining the time it takes for the package (12b) to move between a position in which the loss of product is detected and reject means (45) and using said singal (S) to cause rejection of the package (12b) by the reject means.

6.      A method according to any preceding claim characterised by vibrating the package (12d) to cause said relative movement or further relative movement between the package (12d) and the product (P).

7.      A method according to claim 6 characterised by conveying a package (12d) from which no product loss is detected to a package smoothing zone (41) after it has been vibrated.

8.      Apparatus for checking packages containing product characterised in that means (27) is provided for causing the package (12b) and product (P) to move relative to each other, and detector means (32) is provided for detecting loss of product from the package and for providing a signal (S) which indicates that product loss has occurred.

9.      Apparatus according to claim 8 characterised in that the package (12b) is accelerated by means of a moving surface (27) on which the package is placed.

10.     Apparatus according to claim 9 charactersised in that the moving surface (27) is a conveyor arranged to accelerate the package (12b) substantially from rest.

11.     Apparatus according to claim 9 or 10 characterised in that a delivery mechanism (10) urges the package (12a) towards the moving surface (27) which moves in a direction transverse to the direction of movement of the package as it leaves the delivery mechanism.

12. Apparatus according to claim 8,9,10 or 11 characterised in that detector means (32) is associated with timer means (60) arranged to cause operations of reject means (45) after receiving the signal (S).

13. Apparatus according to any of claims 8 to 12 characterised in that a vibration station (35) is provided for vibrating the packages (12d) to cause said relative movement or further relative movement.

14. Apparatus according to claim 13, characterised in that the vibration is effected by means of conveyor (36) against which the package is held and which is vibrated by rotary means (38).

FIG.1

FIG.4

0137662

FIG. 2

FIG. 3

0137662

62    50

13    17

64

63

60    **FIG.5**

18

62

50    17    18    B

60    **FIG.6**

FIG.7

FIG. 8

**European Patent Office**

**EUROPEAN SEARCH REPORT**

0137662

. Application number

EP 84 30 5635

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 256 503 (MITSUBISHI JUKOGYO K.K.) * Figures 2,3; claims * | 1,5,8, 12 | B 07 C 5/34 G 01 M 3/00 |
| A | DE-A-3 050 379 (BERNHARD BEUMER MASCHINENFABRIK KG) * Figures 1,2; page 5 * | 1,5,8, 12 | |
| A | DE-A-2 726 169 (PRAKKEN) | 1 | |

TECHNICAL FIELDS SEARCHED (Int. Cl.4)

B 07 C
B 65 B
G 01 M

The present search report has been drawn up for all claims

| Place of search THE HAGUE | Date of completion of the search 20-11-1984 | Examiner PESCHEL W. |
|---|---|---|